# EUROPÄISCHE PATENTSCHRIFT

(11) **EP 0 791 497 B1**
(45) Veröffentlichungstag und Bekanntmachung des Hinweises auf die Patenterteilung: **30.01.2002**
(21) Anmeldenummer: 97102171.2
(22) Anmeldetag: 12.02.1997
(51) Int. Cl.: B60M 1/00, B60H 1/00

(54) **Einrichtung zur Beheizung eines Fahrzeuges**
Heating device for vehicle
Dispositif de chauffage pour véhicule

(30) Priorität: 25.05.1996 DE 19621267
(43) Veröffentlichungstag der Anmeldung: 27.08.1997
(73) Patentinhaber: Volkswagen Aktiengesellschaft, 38436 Wolfsburg (DE)
(72) Erfinder: Schulenburg, Jens, Dipl.-Ing., 38448 Wolfsburg (DE); Grundmann, Edgard, Dipl.-Ing., 38442 Wolfsburg (DE); Launhardt, Helmut, 38550 Isenbüttel (DE)

(56) Entgegenhaltungen:
- WO-A-93/11955
- DE-A- 3 245 026
- DE-A- 3 638 471
- DE-A- 3 823 474

## Beschreibung

Die Erfindung betrifft eine Einrichtung zur Beheizung eines Fahrzeuges, insbesondere eines Elektrofahrzeuges oder eines Kraftfahrzeuges mit einem heizleistungsschwachen Verbrennungsmotor.

Einrichtungen zur Beheizung des Fahrgastraumes eines Kraftfahrzeuges oder Elektrofahrzeuges sind bekannt. Sie weisen üblicherweise einen über einen oder mehrere Wärmetauscher geführten Kühlflüssigkeitskreislauf zur Kühlung der Antriebseinheit auf, bei dem der oder einer der Wärmetauscher der Erwärmung von Luft für den Fahrgastraum dient.

Die DE 42 06 611 A1 hat eine derartige Einrichtung zum Gegenstand, bei der zur optimalen Auslegung des Wärmetauschers vor Eintritt des Kühlmittels in diesen ein Wärmespeicher vorgesehen ist, der es ermöglicht, Schwankungen der Wärmeentwicklung zu kompensieren und dem Wärmetauscher die Kühlflüssigkeit mit einem relativ konstanten Temperaturniveau zuzuleiten. In der Schrift ist ausgeführt, daß ein als Wärmespeicher eingesetzter Latentwärmespeicher auch nach einer mehrstündigen Fahrtunterbrechung sofort wieder Wärmeenergie zum Heizen des Fahrgastraumes zur Verfügung stellen kann, und des weiteren, daß die Anordnung weiterer Wärmequellen für die in den Fahrgastraum geführte Heizluft vorgesehen sein kann, insbesondere elektrische Zusatzheizungen, um die Temperatur der Heizluft auf ein höheres Niveau anheben zu können.

Die DE 44 33 836 C1 beschreibt eine Vorrichtung zur Beheizung eines Innenraumes eines Elektrofahrzeuges mit luftgekühlter Hochtemperaturbatterie, bei der die Batterieabwärme für die Heizung genutzt wird. Dabei ist ein erster Wärmetauscher zur Abkühlung der Batterie-Kühlluft und zur Erwärmung einer Flüssigkeit in einem Flüssigkeitskreislauf angeordnet, in dem zur Abgabe von Wärme an Luft für den Innenraum des Elektrofahrzeuges ein zweiter Wärmetauscher angeordnet ist, der mit wärmeerzeugenden Komponenten des Elektroantriebes zur Aufnahme der Abwärme dieser Komponenten verbunden ist. Im Flüssigkeitskreislauf kann ein Wärmespeicher angeordnet sein, um vorübergehend für Heizzwecke nicht benötigte Wärme speichern zu können.

Gegenstand der DE 43 27 866 ist eine Einrichtung zur Klimatisierung des Fahrgastraumes und zur Kühlung des Antriebssystems von Elektrofahrzeugen, die zwei in einem an den Fahrgastraum angeschlossenen Luftführungskanal hintereinander angeordnete Wärmetauscher aufweist. Von diesen ist der eine zusammen mit einer Umwälzpumpe und einem Kältespeicher in einem Kreislauf eines Kältetransportmittels und der andere zusammen mit einer Umwälzpumpe und einem Wärmespeicher in einem über das Antriebssystem des Elektrofahrzeugs geführten Kreislauf eines Wärmetransportmittels einbezogen. Kälte- und Wärmespeicher sind von einem einzigen Energiespeicher gebildet, der wechselweise in den Kältetransportmittel- oder Wärmetransportmittelkreislauf einschaltbar ist. Im Fahrbetrieb kann zum Laden des Wärmespeichers ein Wärmeüberschuß aus dem Antriebssystem gegenüber dem Wärmebedarf im Fahrgastraum genutzt werden und während der Batterieaufladung Abwärme aus der Batterie. Zusätzlich kann der Wärmespeicher bei einer Batterieaufladung auch mit einem separaten Heizelement mit Wärmeenergie geladen werden.

Die vorbeschriebenen Einrichtungen ermöglichen es, den Wärmebedarf im Fahrgastraum bei einem im Kühlflüssigkeitskreislauf gegebenen Defizit an Wärmeenergie aus einem in diesen integrierten Wärmespeicher auszugleichen, der vorübergehend nicht benötigte (DE 42 06 611 A1, DE 44 33 836 C1, DE 43 27 866 C2) oder über ein separates elektrisches Heizelement zugeführte Wärmeenergie speichert (Elektrofahrzeug nach DE 43 27 866 C2).

Ferner ist aus der gattungsbildenden WO 93/11 955 A1 eine Einrichtung zur Beheizung eines Fahrzeuges mit einem Kühlflüssigkeitskreislauf für eine Antriebseinheit bekannt, in dem ein Wärmetauscher für die Fahrzeugbeheizung vorgesehen ist, wobei ein Wärmespeicher verwandt wird um ein späteres Starten bzw. ein Aufwärmen des Innenraumes zu erleichtern.

Es ist Aufgabe der Erfindung, eine Einrichtung zur Fahrzeugbeheizung mit einem Kühlflüssigkeitskreislauf nach dem Oberbegriff des Anspruchs 1 zu schaffen, durch die die Ladung des Wärmespeichers vereinfacht, die Beheizung des Fahrgastraumes eines Elektrofahrzeuges oder eines Kraftfahrzeuges mit einem heizleistungsschwachen Verbrennungsmotor verbessert und die Betriebsbereitschaft des Kraftfahrzeuges bei niedrigen Außentemperaturen sichergestellt werden können.

Diese Aufgabe wird bei einer Einrichtung zur Beheizung eines Fahrzeuges nach dem Oberbegriff des Anspruchs 1 durch dessen kennzeichnende Merkmale gelöst. Vorteilhafte Aus- und Weiterbildungen sind in den Unteransprüchen dargestellt.

Dadurch, daß in der Einrichtung, die einen im Kühlflüssigkeitskreislauf für die Antriebseinheit angeordneten Wärmetauscher für die Fahrzeugbeheizung, einen diesem vorgeschalteten Wärmespeicher und eine steuerbare Pumpe für die Kühlflüssigkeit aufweist, ein vorzugsweise elektrischer Flüssigkeitsheizer in einem Flüssigkeitsheizkreislauf für den Wärmespeicher mit Anschluß an eine externe Energiequelle integriert ist, kann der Wärmespeicher jederzeit und jedenorts aus dem Netz geladen werden, beispielsweise auch in der Fahrzeuggarage des Nutzers. Das ist insbesondere für Fahrzeuge mit einem Verbrennungsmotor, aber auch für Fahrzeuge mit Elektromotoren von besonderem Vorteil, wenn die Ladung des Wärmespeichers über die durch die jeweilige Antriebseinheit erwärmte Kühlflüssigkeit allein nicht ausreicht, um den Wärmetauscher mit der erforderlichen Wärmeenergie für die Beheizung des Fahrzeuges zu versorgen, oder, wenn der Verbrennungsmotor beim Start des Fahrzeugs noch kalt ist.

In diesen Fällen, d.h. auch bei verbrauchsgünstigen, weniger Wärmeenergie abgebenden Verbrennungsmotoren, bei kurzen Fahrtstrecken oder bei verkehrsbedingten niedrigen Fahrtgeschwindigkeiten kann der Wärespeicher problemlos geladen werden, und es kann aus dem geladenen Wärmespeicher zusätzliche Energie entnommen werden. In kalten Klimazonen, in denen zur Sicherstellung der Betriebsbereitschaft des Fahrzeugs eine Dauerbeheizung des Motorblockes üblich ist, kann anstelle dieser energieaufwendigen Dauerbeheizung die Betriebsbereitschaft des Fahrzeugs mit der erfindungsgemäßen Einrichtung weniger energieaufwendig sichergestellt werden. Dazu wird der aus dem Netz über den Heizflüssigkeitskreislauf geladene und gut isolierte Wärmespeicher vor dem Start durch Einschalten der elektrischen Pumpe in den Kühlflüssigkeitskreislauf und damit auch in den Motorblock entladen, wodurch dieser vorgewärmt wird.

Der Flüssigkeitsheizer kann vorteilhaft ohne zusätzliche Pumpe in den Kühlflüssigkeitskreislauf eingebunden werden, indem er räumlich tiefer als der Wärmespeicher angeordnet und, diesen einschließend, über eine Steigleitung und eine Falleitung mit dem Kühlflüssigkeitskreislauf verbunden ist, so daß beim Anschluß des Flüssigkeitsheizers an eine Stromquelle infolge der Erwärmung der in diesem befindlichen Flüssigkeit eine Schwerkraftzirkulation in Gang gesetzt wird.

Vorteilhaft kenn ein Absperrventil zwischen der Anbindung der Falleitung in den Kühlflüssigkeitskreislauf und dem Wärmetauscher auf einfache Weise eine Zirkulation der Kühlflüssigkeit durch die Antriebseinheit verhindern.

Die Erfindung wird nachstehend anhand eines Ausführungsbeispiels erläutert. Die zugehörige Zeichnung zeigt eine schematische Darstellung einer erfindungsgemäßen Einrichtung.

Die Einrichtung weist einen Kühlflüssigkeitskreislauf 1 für einen als Antriebseinheit fungierenden Verbrennungsmotor 2, einen im Kühlflüssigkeitskreislauf angeordneten Wärmetauscher 3 für die Beheizung des Fahrzeugs, einen diesem vorgeschalteten Wärmespeicher 4, zwischen dem Wärmetauscher 3 und dem Verbrennungsmotor 2 eine elektrische Pumpe 5 für die Kühlflüssigkeitszirkulation und einen von der Kühlflüssigkeit durchströmbaren elektrischen Flüssigkeitsheizer 6 zur Ladung des Wärmespeichers 4 auf. Der Flüssigkeitsheizer 6 ist in einem Flüssigkeitsheizkreislauf 1a für den Wärmespeicher 4 eingebunden, räumlich tiefer als dieser angeordnet und mit einer in Strömungsrichtung vor dem Wärmespeicher 4 in den Kühlflüssigkeitskreislauf 1 mündenden Steigleitung 7 und einer nach dem Wärmespeicher 4 abgehenden Falleitung 8 mit diesem verbunden. Zwischen der Anbindung der Falleitung 8 in den Kühlflüssigkeitskreislauf 1 und dem Wärmetauscher 3 ist ein Absperrventil 9 angeordnet.

Bei nicht ausreichender Ladung des Wärmespeichers 4 durch die über den Verbrennungsmotor geführte Kühlflüssigkeit kann der Wärmespeicher 4 durch den elektrischen Flüssigkeitsheizer 6 geladen werden. Dazu wird die Pumpe 5 ausgeschaltet, das Absperrventil 9 geschlossen und der Kühlwasserheizer 6 an eine externe Energiequelle U angeschlossen. Durch die Erwärmung der Flüssigkeit im Flüssigkeitsheizer 6 wird nun ohne zusätzliche Pumpe im Flüssigkeitsheizkreislauf 1a eine Schwerkraftzirkulation in Richtung der angegebenen Pfeile in Gang gesetzt, und der Wärmespeicher 4 wird geladen. Der geladene und gut isolierte Wärmespeicher 4 kann anschließend nach Bedarf in den Kühlflüssigkeitskreislauf 1 nach Öffnung des Absperrventils 9 und Einschalten der Pumpe 5 entladen und zur Heizung der Luft für den Fahrgastraum über den dazu einzuschaltenden Wärmetauscher 3 und/oder zur Erwärmung des Motorblockes genutzt werden.

### BEZUGSZEICHEN

- 1: Kühlflüssigkeitskreislauf
- 1a: Flüssigkeitsheizkreislauf
- 2: Verbrennungsmotor
- 3: Wärmetauscher
- 4: Wärmespeicher
- 5: elektrische Pumpe
- 6: Flüssigkeitsheizer, Heizelement
- 7: Steigleitung
- 8: Falleitung
- 9: Absperrventil
- U: externe Energiequelle

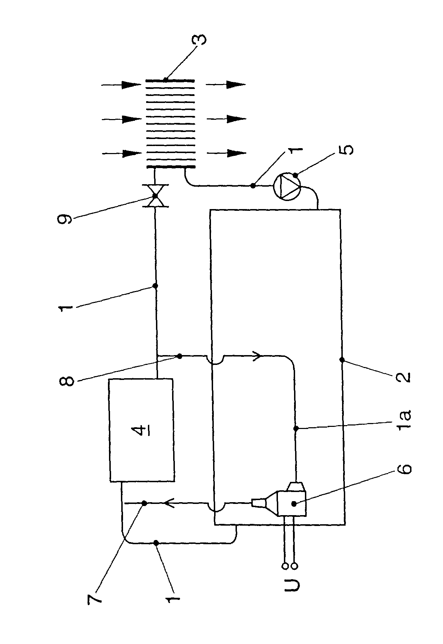

## Patentansprüche

1. Einrichtung zur Beheizung eines Fahrzeuges mit einem Kühlflüssigkeitskreislauf für die Antriebseinheit, einem in diesem angeordneten Wärmetauscher (3) für die Fahrzeugbeheizung und einem diesem vorgeschalteten Wärmespeicher (4), einer steuerbaren Pumpe (5) für die Kühlflüssigkeit und einem Heizelement zur Ladung des Wärmespeichers (4), **dadurch gekennzeichnet, daß** das Heizelement ein vom Wärmespeicher getrennter Flüssigkeitsheizer (6) mit Anschluß an eine externe fahrzeugfremde Energiequelle ist, der in einem Flüssigkeitsheizkreislauf (1a) für den Wärmespeicher (4) angeordnet ist.

2. Einrichtung nach Anspruch 1, **dadurch gekennzeichnet, daß** der Flüssigkeitsheizkreislauf (1a) in den Kühlflüssigkeitskreislauf (1) eingebunden ist, wobei der Flüssigkeitsheizer (6) räumlich tiefer als der Wärmespeicher (4) angeordnet ist.

3. Einrichtung nach Anspruch 2, **dadurch gekennzeichnet, daß** der Flüssigkeitsheizer (6) über eine Steigleitung (7) auf der Eingangsseite und eine Falleitung (8) auf der Ausgangsseite des Wärmespeichers (4) in den Kühlflüssigkeitskreislauf (1) eingebunden ist.

4. Einrichtung nach Anspruch 3, **dadurch gekennzeichnet, daß** zwischen der Anbindung der Falleitung (8) in den Kühlflüssigkeitskreislauf (1) und dem Wärmetauscher (3) ein Absperrventil (9) angeordnet ist.

5. Einrichtung nach einem der Ansprüche 1 bis 4, **dadurch gekennzeichnet, daß** die steuerbare Pumpe (5) zwischen dem Wärmetauscher (3) und der Antriebseinheit (2) angeordnet ist.

6. Einrichtung nach einem der Ansprüche 1 bis 5, **dadurch gekennzeichnet, daß** der Flüssigkeitsheizer (6) ein elektrischer Flüssigkeitsheizer ist.

## Claims

1. Device for heating a vehicle, with a cooling-fluid circuit for the drive unit, with a heat exchanger (3) arranged in said circuit and intended for the vehicle heating, with a heat store (4) located upstream of said heat exchanger, with a controllable pump (5) for the cooling fluid and with a heating element for charging the heat store (4), **characterized in that** the heating element is a fluid heater (6) separate from the heat store and connected to an external energy source which is independent of a vehicle and which is arranged in a fluid heating circuit (1a) for the heat store (4).

2. Device according to Claim 1, **characterized in that** the fluid heating circuit (1a) is incorporated into the cooling-fluid circuit (1), the fluid heater (6) being arranged at a spatially lower level than the heat store (4).

3. Device according to Claim 2, **characterized in that** the fluid heater (6) is incorporated into the cooling-fluid circuit (1) via a riser pipe (7) on the inlet side and a downpipe (8) on the outlet side of the heat store (4).

4. Device according to Claim 3, **characterized in that** a shut-off valve (9) is arranged between the connection of the downpipe (8) into the cooling-fluid circuit (1) and the heat exchanger (3).

5. Device according to one of Claims 1 to 4, **characterized in that** the controllable pump (5) is arranged between the heat exchanger (3) and the drive unit (2).

6. Device according to one of Claims 1 to 5, **characterized in that** the fluid heater (6) is an electric fluid heater.

## Revendications

1. Dispositif pour le chauffage d'un véhicule comprenant un circuit de liquide de refroidissement pour l'unité d'entraînement, un échangeur de chaleur (3) disposé dans celui-ci, pour le chauffage du véhicule, et un accumulateur de chaleur (4) monté en aval de celui-ci, une pompe réglable (5) pour le liquide de refroidissement et un élément de chauffage pour charger l'accumulateur de chaleur (4), **caractérisé en ce que** l'élément de chauffage est un dispositif de chauffage de liquide (6) séparé de l'accumulateur de chaleur, raccordé à une source d'énergie extérieure externe au véhicule, et qui est disposé dans un circuit de chauffage de liquide (1a) pour l'accumulateur de chaleur (4).

2. Dispositif selon la revendication 1, **caractérisé en ce que** le circuit de chauffage de liquide (1a) est intégré au circuit de liquide de refroidissement (1), le dispositif de chauffage de liquide (6) étant disposé dans l'espace plus profondément que l'accumulateur de chaleur (4).

3. Dispositif selon la revendication 2, **caractérisé en ce que** le dispositif de chauffage de liquide (6) est intégré au circuit de liquide de refroidissement (1) par l'intermédiaire d'une conduite de refoulement (7) du côté de l'entrée, et par l'intermédiaire d'une conduite de descente (8) du côté de la sortie de l'accumulateur de chaleur (4).

4. Dispositif selon la revendication 3, **caractérisé en ce qu**'une soupape d'arrêt (9) est disposée entre le raccordement de la conduite de descente (8) dans le circuit de liquide de refroidissement (1) et l'échangeur de chaleur (3).

5. Dispositif selon l'une quelconque des revendications 1 à 4, **caractérisé en ce que** la pompe réglable (5) est disposée entre l'échangeur de chaleur (3) et l'unité d'entraînement (2).

6. Dispositif selon l'une quelconque des revendications 1 à 5, **caractérisé en ce que** le dispositif de chauffage de liquide (6) est un dispositif de chauffage de liquide électrique.
